Europäisches Patentamt

European Patent Office

Office européen des brevets

(11) **EP 0 833 262 B1**

(19)

(12) **FASCICULE DE BREVET EUROPEEN**

(45) Date de publication et mention
de la délivrance du brevet:
**24.11.2004 Bulletin 2004/48**

(51) Int Cl.⁷: **G06F 17/30**, G06K 9/46

(21) Numéro de dépôt: **97402216.2**

(22) Date de dépôt: **24.09.1997**

(54) **Procédé de recherche d'échantillons dans des images d'une base de données**

Suchverfahren für Muster in Bildern einer Datenbank

Method for searching patterns in images in a database

(84) Etats contractants désignés:
**DE GB IT NL**

(30) Priorité: **26.09.1996 FR 9611751**

(43) Date de publication de la demande:
**01.04.1998 Bulletin 1998/14**

(73) Titulaire: **COMMISSARIAT A L'ENERGIE
ATOMIQUE
75015 Paris (FR)**

(72) Inventeurs:
• **Essafi, Hassane
91400 Orsay (FR)**
• **Marie-Julie, Jean-Michel
94400 Vitry-Sur-Seine (FR)**

(74) Mandataire: **Ilgart, Jean-Christophe et al
c/o Société Brevatome,
3, rue du Docteur Lanceraux
75008 Paris (FR)**

(56) Documents cités:
**US-A- 4 789 933**

• **BONNEAU R: "USING THE CENTROID
OPERATOR FOR FASTER MULTIRESOLUTION
IMAGE COMPRESSION AND PATTERN
RECOGNITION" PROCEEDINGS OF THE SPIE,
vol. 2569, no. PART 02, 12 juillet 1995, pages
813-824, XP000672578**
• **PATENT ABSTRACTS OF JAPAN vol. 095, no.
003, 28 avril 1995 & JP 06 343140 A
(MATSUSHITA ELECTRIC IND CO LTD), 13
décembre 1994,**
• **ZHANG L ET AL: "GENERATING AND CODING
OF FRACTAL GRAPHS BY NEURAL NETWORK
AND MATHEMATICAL MORPHOLOGY
METHODS" IEEE TRANSACTIONS ON NEURAL
NETWORKS, vol. 7, no. 2, 1 mars 1996, pages
400-407, XP000592034**

## Description

L'invention concerne un procédé de recherche d'échantillons dans des images d'une base de données.

On s'intéresse ici à la recherche automatique d'un détail particulier dans une collection d'images enregistrées dans une base de données.

Une solution simple consiste à décrire les images par un texte ou par des mots-clés et de compulser le catalogue résultant de cette description. L'inconvénient de cette méthode très simple à appliquer est qu'elle demande du temps pour la création du catalogue et qu'il n'est pas possible de décrire les images avec suffisamment de précision ou d'objectivité, d'autant moins que l'objet de la recherche n'est pas toujours connu à ce moment : des éléments importants des images seront négligés ; de plus, un élément tel qu'un bâtiment, un véhicule, un personnage, etc. sera généralement décrit par la catégorie dont il fait partie, et ne sera alors identifié qu'après un examen visuel de l'image pour examiner s'il correspond bien à l'échantillon. On conçoit donc que cette méthode est peu pratique pour des données nombreuses.

Une autre solution consiste à rechercher un objet en décrivant son contour ou sa texture et en le recherchant dans la banque de données d'image. Il faut alors avoir analysé numériquement les images pour en extraire les informations correspondantes. Il n'existe malheureusement pas de méthode d'extraction de contour ou de texture d'objets qui soit efficace dans tous les cas, et de plus ces méthodes sont mises en échec quand les objets sont partiellement masqués, dans l'ombre, ou quand ils sont éclairés de façons différentes sur l'échantillon et sur une des images.

Enfin, une dernière méthode possible consiste à comparer l'échantillon avec les différentes parties des images ; la comparaison est positive quand les points d'un fragment d'image ont la même teinte que les points de l'échantillon. Mais les temps de calcul sont très élevés à cause du nombre de comparaisons à faire et la méthode devient elle aussi inopérante si l'échantillon est présent avec une taille ou une orientation différente sur les images.

L'invention s'appuie sur une méthode différente qui implique la compression des images et des échantillons suivant leurs propriétés fractales.

Un objet fractal présente la propriété d'être identique à ses parties : si on en isole un fragment qu'on agrandit, on trouve qu'il est identique à l'objet initial. L'image d'un objet fractal peut être obtenue au moyen de certaines transformations géométriques qu'on applique de façon répétée à une image de départ qui se déforme et converge vers l'objet fractal, qu'on appelle l'attracteur de la transformation géométrique. Bien que les images usuelles ne soient pas véritablement des objets fractals, il est possible de trouver des transformations géométriques dont ces images sont les attracteurs. L'image peut alors être reconstituée en appliquant ces transformations plusieurs fois à une image de départ quelconque. Il n'est alors nécessaire d'enregistrer que les caractéristiques géométriques de la transformation. En pratique, ces transformations sont déterminées en divisant l'image en secteurs (ranges en anglais) et en faisant correspondre un domaine de la même image, c'est-à-dire une autre partie de l'image, de même forme mais de surface plus grande, à chacun des secteurs. En effet, les transformations géométriques aptes à engendrer un attracteur sont contractantes, c'est-à-dire quelles rapetissent les détails sur lesquels elles s'exercent. Les correspondances par lesquelles les secteurs et des domaines sont mis en relation sont choisies pour que les domaines ressemblent aux secteurs auxquels ils sont associés, c'est-à-dire qu'ils aient un aspect similaire une fois qu'on leur a éventuellement imposé certaines modifications de luminosité, de contraste, de rotation ou de symétrie.

Il suffit donc d'enregistrer l'image sous forme de données numériques relatives aux transformations qui l'engendrent, dont l'équation (1) $W_1 = ( \gamma_1 \ x_1 \ y_i \ tx_1 \ ty_1 \ s_1 \ o_i)$ en est une illustration. Il s'agit en réalité de l'écriture d'une transformation Wi sous forme vectorielle, où $\gamma i$ est un indice désignant une isométrie parmi une liste préalablement répertoriée pour passer du domaine au secteur associé, telle qu'une rotation, une réflexion, une symétrie ou une modification d'échelle ; xi et yi sont les coordonnées de position du domaine ; txi et tyi sont les coordonnées de translation pour passer du domaine au secteur associé ; et si et oi sont des coefficients de contraste et de luminosité qui permettent de modifier les niveaux de gris dans le domaine pour obtenir ceux du secteur associé. Le coefficient de contraste si permet de régler la différence des niveaux de gris des points d'un secteur en modifiant la différence équivalente parmi les points du domaine qui lui est associé, et le coefficient de luminosité oi permet d'éclaircir ou de foncer le secteur par rapport au domaine. L'ensemble des transformations forme un index de l'image. Comme ces vecteurs sont en nombre égal à celui, relativement réduit, des secteurs de l'image, l'index occupe un volume de mémoire beaucoup plus réduit que si l'on avait enregistré complètement l'image, sous forme d'une couleur ou d'un niveau de gris associé à chacun de ses points.

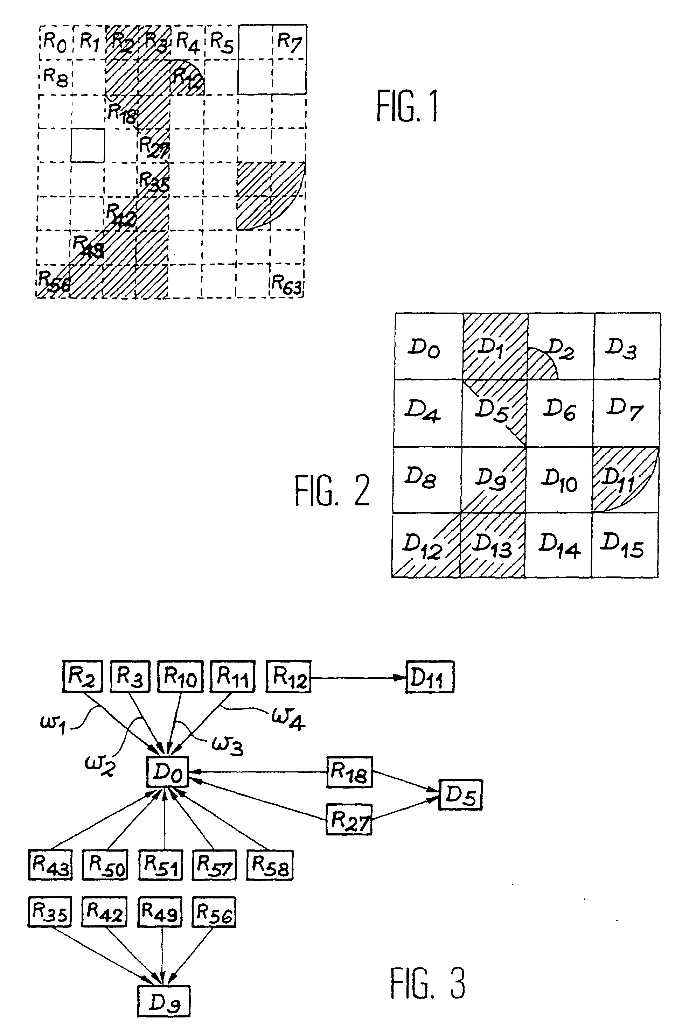

Un exemple concret permettra de mieux saisir ces notions : la figure 1 représente une image, formée ici d'une mosaïque de deux couleurs, et on y a figuré une division en secteurs carrés, ici numéroté selon les rangées horizontales de R0 à R63, par une grille. La figure 2 représente une division de la même image en seize domaines, numérotés de la même façon de D0 à D15 et dont chacun a la surface de quatre secteurs et, comme eux, une forme carrée.

Cette image de forme simple permet de mettre en relation facilement domaines et secteurs. C'est ainsi que les secteurs R0, R1, R4, R5, etc. entièrement blancs ont une physionomie identique à un domaine entièrement blanc tel que D0 (ou D3 ou D14 par exemple) ;

les secteurs entièrement noirs tels que R2 et R3 pourront être mis en relation avec un domaine entièrement noir tel que D1 ou D13, mais on pourra aussi les mettre en relation avec le domaine D0, qui possède le même aspect à un changement de luminosité près ; les secteurs tels que R18 et R27 mi-partis blanc et noir selon une diagonale seront mis en relation avec le domaine D5 de même aspect ; R35, R42, R49 et R56 avec D9 pour la même raison ; le secteur R12 sera mis en relation avec le domaine D11 qui présente le même aspect à une rotation d'un quart de tour près.

L'ensemble de ces relations de correspondance peut prendre la forme d'un graphe dont une partie est donnée à la figure 3. L'application des équations (1) consiste concrètement, partant d'une image de départ sur laquelle on a distingué les domaines D0 à D15, à construire une nouvelle image sur laquelle on reporte, pour chacun des secteurs R0 à R63, le contenu du domaine associé de l'image de départ après lui avoir appliqué le changement d'échelle nécessaire et éventuellement les modifications de luminosité, d'orientation, etc. définies par la transformation wi ; en répétant ces opérations, on convergera vers l'image de la figure 1 quelle que soit l'image de départ.

L'invention consiste à appliquer cette méthode déjà connue de compression d'images sous forme de transformations géométriques exprimant leur propriétés fractales à la recherche d'échantillons sur ces images. Sous sa forme la plus générale, elle consiste à appliquer la même méthode de compression aux échantillons pour obtenir d'autres index numériques, de même nature que ceux des images, et à comparer de façon appropriée les index des échantillons aux index des images pour déterminer si les échantillons sont présents sur les images. Il convient cependant de recourir à certaines précautions pour que la comparaison puisse être valablement effectuée. En particulier, il convient que les fragments (domaines et secteurs) mis en relation de similitude dans les index d'images ne soient pas plus éloignés qu'une limite commensurable aux dimensions des échantillons.

La justification de cette condition va maintenant être expliquée, après quoi on abordera d'autres aspects et d'autres possibilités de l'invention. On s'appuiera sur les figures suivantes :

- les figures 1, 2 et 3 illustrent comment comprimer une image à l'aide de ses propriétés fractales,
- les figures 4 et 5 illustrent conjointement le principe de compression d'image particulière sur lequel l'invention est fondée,
- la figure 6 illustre un mode d'organisation d'index d'image,
- la figure 7 illustre un mode possible de recherche d'échantillon à des échelles de division différentes sur l'image,
- les figures 8, 9 et 10 illustrent une compression d'image à un niveau moins fin de division de l'image, et comment créer un index correspondant,
- les figures 11 et 12 illustrent des modes de recherche automatique dans les index des images,

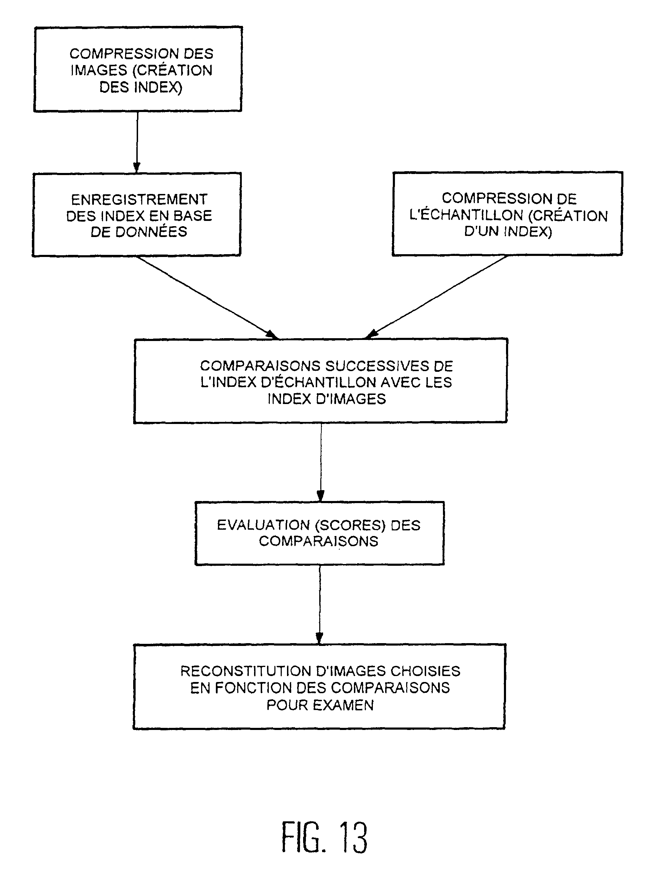

- et la figure 13 illustre les étapes fondamentales du procédé conforme à l'invention.

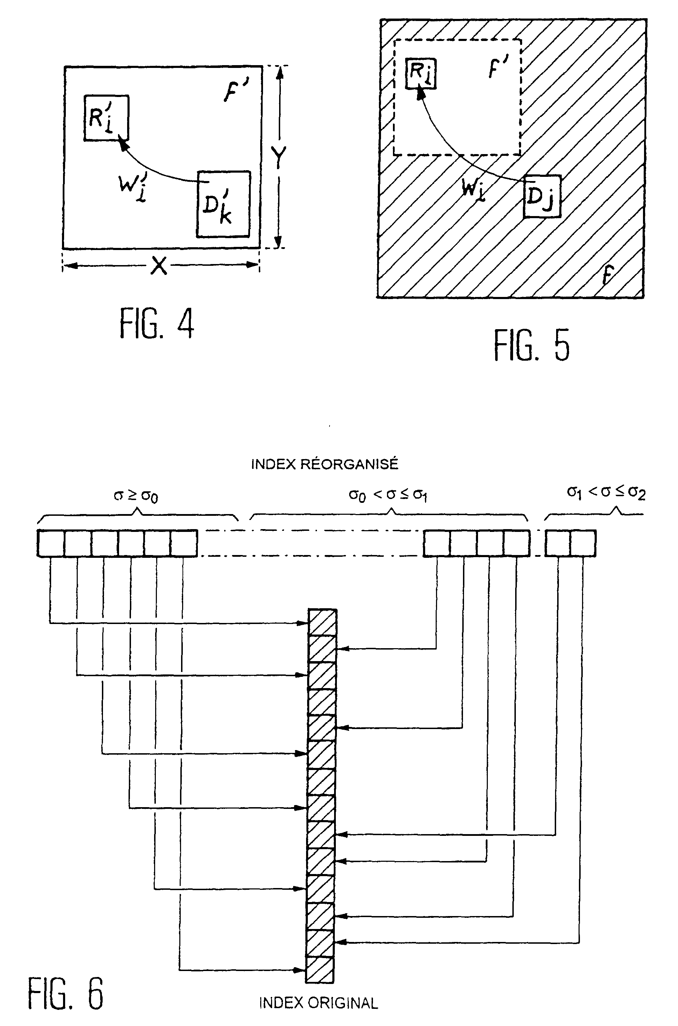

Les figures 4 et 5 représentent un échantillon f' et une image f sur laquelle cet échantillon est présent. On compose donc un index de l'échantillon f' suivant le principe précédemment exposé, en associant à chacun de ses secteurs R'i un domaine D'k au moyen d'une transformation w'i. Cependant, on voit à la figure 5 que si l'échantillon f' est englobé dans une image f sensiblement plus ample, le domaine Dj qui sera associé au secteur Ri semblable au secteur R'i défini ci-dessus sera le plus souvent choisi hors des limites de l'échantillon f', sur le reste de l'image f. La transformation afférente wi sera donc différente de w'i, ce qui implique qu'il sera impossible de reconnaître que Ri et R'i sont semblables ; comme on conclura de même pour un grand nombre d'autres secteurs de l'échantillon f', il sera impossible de reconnaître qu'il se trouve sur l'image et la recherche sera donc infructueuse et incorrecte.

C'est pourquoi, selon l'invention, on spécifie que les images telles que f seront comprimées en n'admettant que des transformations wi qui impliqueront des translations txi et tyi, c'est-à-dire des distances entre le secteur Ri et le domaine Di qu'elles mettent en relation, inférieures à une limite conventionnelle. Cette limite sera commensurable aux dimensions prévisibles des échantillons, c'est-à-dire aussi proche que possible de ces dimensions, sans qu'on doive cependant rechercher une égalité absolue. En effet, il est possible de reconnaître la présence d'un échantillon sur une image sans identifier tous ses secteurs sur celle-ci. Il suffit en pratique que des parties suffisamment importantes des ensembles de transformations wi et w'i soient identiques. A titre d'exemple, on peut choisir comme limite une des deux dimensions X et Y d'un échantillon f' rectangulaire.

Cette façon de procéder présente cependant l'inconvénient que le choix des domaines Di à associer aux secteurs Ri est restreint, ce qui fait que les secteurs Ri seront souvent évalués au moyen de domaines moins ressemblants et que le reconstruction de l'image sera moins bonne. C'est pourquoi on conseille plutôt de comprimer plusieurs fois chaque image de la base de données, une première fois de la façon classique, sans imposer de limite de distance pour les transformations wi, et une ou plusieurs fois en imposant autant de distances que de tailles prévisibles d'échantillons. La recherche de l'échantillon sur l'image comprendra alors une étape automatique, conforme à l'invention, de comparaison des index en choisissant l'index de l'image associé à la limite la plus comparable avec la taille de l'échantillon ; si la comparaison semble positive, l'image pourra être reconstituée pour être examinée à l'aide de l'index aux transformations dépourvues de limite.

Il faut cependant admettre que la comparaison des index entre les secteurs de l'échantillon et les secteurs de toutes les images implique un temps de calcul important ; un perfectionnement du procédé permet de remédier à cet inconvénient en supprimant des calculs superflus. Il serait certes possible de travailler sur des images de taille réduite, mais la reconstitution des détails les plus fins serait alors impossible. C'est pourquoi on préconise plutôt de ne faire porter la comparaison des index que sur les parties de l'image et de l'échantillon qui présentent les informations les plus nombreuses, au détriment des zones plutôt uniformes de l'image qui correspondent en général au fond de celle-ci ou à l'intérieur des objets qu'elle représente. La discrimination des secteurs intéressants est faite en considérant leur écart-type σ, qui est élevé pour les zones texturées de l'image présentant beaucoup de zones claires et foncées et faible pour les zones uniformes. L'écart-type de chaque secteur est calculé sur la distribution statistique des niveaux de gris de ses points.

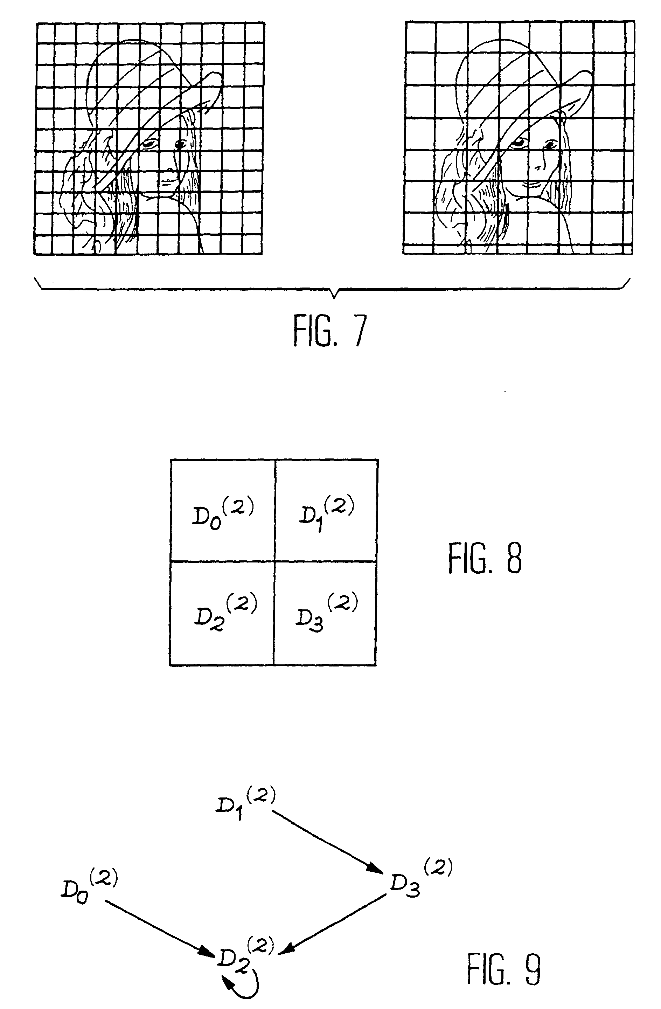

L'index de l'image et celui de l'échantillon total peuvent alors être purgés des zones uniformes de peu d'intérêt, ce qui accélère sensiblement la durée de la comparaison. Ici encore, le perfectionnement proposé pour faciliter la mise en pratique de l'invention présente l'inconvénient que des informations sont perdues quand l'image doit être reconstituée, car les secteurs exclus ne sont plus remplis correctement et ne contribuent donc plus à la reconstitution. C'est pourquoi, si du moins l'index abrégé sur lequel porte la comparaison sert aussi à la reconstitution de l'image, on préfère classer les parties de l'index par catégories, les transformations wi associées à des écarts-types σi étant regroupées selon différentes plages d'écarts-types limitées par des valeurs de seuil telles que σ0, σ1, etc. Ce regroupement est représenté à la figure 6. Les transformations wi des secteurs aux écarts-types les plus forts sont en tête, et seules ces transformations sont comparées avec celles de l'échantillon.

Il faut aussi examiner la situation où l'échantillon est bien présent sur l'image mais avec une échelle différente. Dans ce cas encore, les index ne seront pas comparés convenablement et la recherche sera à la fois infructueuse et incorrecte.

Il est possible de diviser la même image plusieurs fois par des grilles ayant des pas différents (figure 7) avec l'espoir qu'une d'elles divise le détail recherché sensiblement de la même façon, c'est-à-dire avec le même nombre de morceaux, que l'échantillon, mais cette technique est coûteuse car un index doit être calculé pour chacune des grilles ; un autre perfectionnement apporté à l'invention peut aussi conduire de bons résultats.

Ce nouvel aspect de l'invention consiste à exploiter la différence de taille entre les secteurs et les domaines pour généraliser la mise en relation de ces éléments d'images à des niveaux successifs correspondant à des divisions de plus en plus grossières de l'image.

Si on revient à l'exemple des figures 1 à 3, l'image peut encore être décomposée en quatre super-domaines $D_0^{(2)}$ à $D_3^{(2)}$ qui, comme le montre la figure 8, embrassent chacun quatre domaines (respectivement D0, D1, D4, D5 ; D2, D3, D6, D7 ; D8, D9, D12, D13 ; D10, D11, D14, D15). On peut alors déduire des relations analogues à celles de la figure 3 pour réduire le contenu des domaines à partir des super-domaines, et ces relations pourront être incorporées à l'index de compression de l'image.

En procédant ainsi sur un certain nombre de niveaux, on accroît les chances d'identifier un échantillon qui serait présent à un échelle différente sur l'image : il suffit qu'il soit divisé à un niveau quelconque de division de l'image de la même façon que sur l'échantillon lui-même, c'est-à-dire en un même nombre de morceaux.

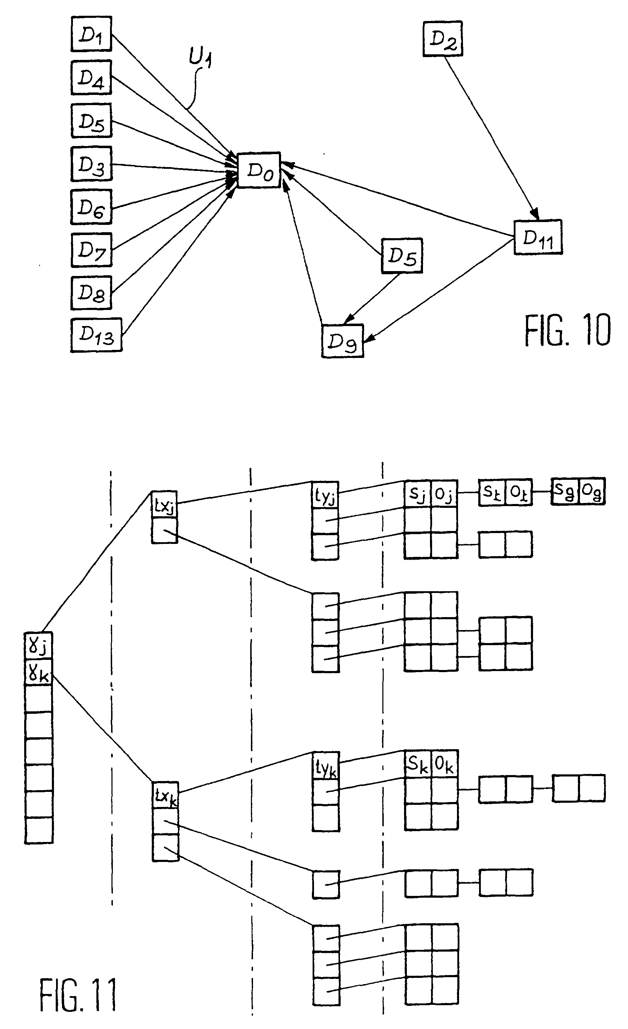

Cette méthode impose cependant d'établir les transformations wi à tous les niveaux de division de l'image, au prix de temps de calcul importants. Une autre idée, qui doit donner de bons résultats, consiste à produire des graphes de relations entre les éléments d'un même niveau de division de l'image. La figure 9 montre un tel graphe au niveau des super-domaines $D_0^{(2)}$ à $D_3^{(2)}$ de la figure 8 : il indique que, pour obtenir des éléments (domaines) des super-domaines, il faut les chercher dans d'autres super-domaines selon le sens des flèches ; ainsi, le super-domaine $D_1^{(2)}$ peut être au moins partiellement reconstitué à partir des éléments du super-domaine $D_3^{(2)}$, qui peut lui-même être au moins partiellement reconstitué à partir des éléments du super-domaine $D_2^{(2)}$.

La construction de ces graphes est vraiment simple et peu coûteuse, car il suffit de prendre les informations de la figure 3 entre domaines et secteurs et de les regrouper en remplaçant les secteurs par les domaines auxquels ils appartiennent : on obtient alors le graphe de la figure 10 (R2, R3, R10 et R11 ont été remplacés par D1 ; R35 et R42 par D9 ; R12 par D2, etc.). Le même procédé permet d'obtenir d'autres graphes tel que celui de la figure 9 en remplaçant les domaines de la figure 10 par les super-domaines ou par des éléments d'autres niveaux de division de l'image f.

Après avoir agi de même pour l'échantillon f', on obtient deux jeux de graphes qu'il est possible de comparer individuellement pour établir si l'échantillon se retrouve sur l'image à un niveau de division différent, c'est-à-dire à une échelle différente.

Une autre façon de réduire le nombre de comparaisons et les temps de calcul consiste à opérer de nouveau une sélection des transformations wi de l'image d'après les valeurs des translations txi et tyi : on ne considère alors plus que celles dont les valeurs de translations sont inférieures à des seuils, c'est-à-dire pour lesquelles txi≤X et tyi≤Y. Ce procédé présente des ressemblances avec le procédé principal de l'invention, qui consiste déjà à limiter les valeurs de txi et tyi en comprimant l'image. Le procédé signalé ici est appliqué ensuite et permet d'imposer des seuils X et Y plus bas, selon la taille de l'échantillon, qui pouvait n'être pas connue auparavant. Il s'agit d'une sorte d'ajustement de seuil que l'opérateur peut choisir à volonté selon les caractéristiques de la recherche, mais dont l'inconvénient est de réduire le nombre d'informations sur lesquelles la comparaison portera, contrairement au procédé principal.

Les résultats de la recherche peuvent être évalués par des scores ou des pourcentages représentant le nombre de transformations w'i appariées à des transformations wi, ou de secteurs de l'échantillon qui trouvent un homologue sur une image pour une position possible de l'échantillon sur l'image. Dans le meilleur des cas, c'est-à-dire si la superposition est parfaite, la division identique, et les domaines reliés aux secteurs tous dans le pourtour de l'échantillon, le score est de 100%. Un diagnostic positif peut être en pratique établi avec un score sensiblement inférieur.

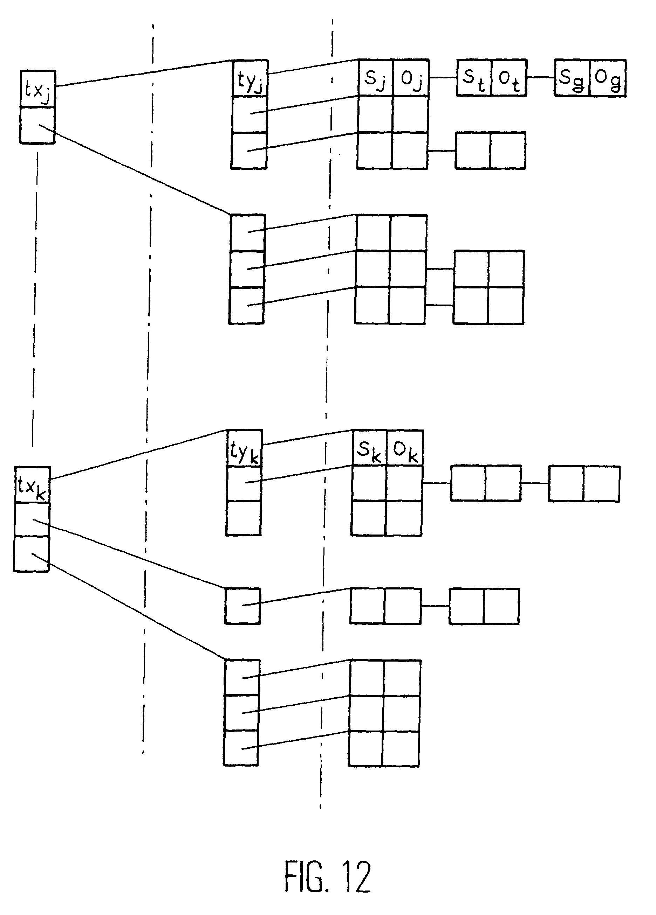

On se reporte maintenant à la figure 11 pour une explication plus concrète. Les valeurs des transformations wi de compression de chaque image f sont rassemblées en arbre d'après les éléments communs qu'elles comprennent, chacun des indices d'isométrie y étant généralement relié à une pluralité de translations tx, chacune de ces translations à une pluralité de translations orthogonales ty, et chacune de ces translations orthogonales à une pluralité de couples de coefficients de contraste et de luminosité s et o : tous les paramètres de la transformation wi sont utilisés pour la comparaison à l'exception des positions x et y.

Chaque vecteur de transformation w'i de l'échantillon f' est donc comparé aux transformations wi de l'image f en recherchant un indice d'isométrie identique, puis successivement des translations tx, ty et des coefficients s et o analogues. Le score de la recherche sur une image est donc le rapport entre le nombre de transformations w'i comparées avec succès à au moins une transformation wi de l'image f et le nombre total de transformations w'i. Le résultat de la comparaison dépend d'un critère de ressemblance entre les transformations wi et w'i. Par exemple, si les valeurs des indices d'isométrie y et des translations tx et ty sont identiques, on calcule alors une distance comme $\sqrt{(si - s'i)^2 + (oi - o'i)^2}$ ou $\sqrt{(si - s'i)^2}$ entre les transformations wi et w'i concernées : la comparaison est fructueuse si cette distance est inférieure à un seuil.

Un procédé analogue, expliqué à l'aide de la figure 12, est exploité si la comparaison porte sur les graphes des figures 9 et 10. On exprime chacun des vecteurs Ui d'un de ces graphes par la relation (2) Ui = (xi yi txi tyi si oi vi), où xi et yi sont les coordonnées de l'élément (domaine, super-domaine, etc.) situé à la pointe du vecteur Ui, txi et tyi les translations faisant passer de l'élément situé à l'origine du vecteur Ui à l'élément situé à sa pointe, si et oi sont les moyennes des coefficients semblables présents dans les vecteurs ou les transformations wi de niveau inférieur de division de l'image regroupés pour former Ui et le nouveau coefficient vi est égal au nombre total des transformations wi de niveau élémentaire regroupés. Ainsi, le vecteur U1 de la figure 10 reliant les domaines D1 à D0 résulte du regroupement des transformations w1, w2, w3 et w4 de la figure 3 reliant respectivement les secteurs R2, R3, R10 et R11 (composant le domaine D1) au domaine D0, ses coefficients de contraste et de luminosité sont

$$s(U1) = \frac{1}{4} [s(w1) + s(w2) + s(w3) + s(w4)],$$

$$o(U1) = \frac{1}{4} [o(w1) + o(w2) + o(w3) + o(w4)]$$

et

$$v(U1) = 4.$$

Les coefficients v servent à pondérer les coefficients s et o pour établir les graphes des niveaux supérieurs (celui de la figure 9 par exemple).

La figure 12 montre que la comparaison porte sur les translations tx et ty, les indices d'isométrie $\gamma$ ayant disparu, puis sur les coefficients s et o. Les critères de comparaison peuvent être les mêmes que pour la figure 11.

L'invention peut trouver application dans de nombreuses techniques : l'exploitation d'images de satellite ou aériennes, la détection à des fins de surveillance et de sécurité, l'imagerie médicale, la publicité, et d'une façon générale tous les domaines où il faut compulser une quantité considérable d'images à la recherche d'un détail précis ou ceux dans lesquels le décision doit être prise automatiquement, par exemple pour reconnaître une forme sur la surface d'un astre ou pour identifier un visage.

## Revendications

1. Procédé de recherche automatique d'échantillons (f') dans des images (f) d'une base de données, **caractérisé en ce qu'**il consiste à comprimer les échantillons (f') et les images (f) pour obtenir des index numériques exprimant des propriétés fractales des échantillons et des images et en particulier des relations de similitude entre des portions différentes (R, D) d'un même échantillon ou d'une même image, et à comparer les index des échantillons avec les index des images, les portions d'une même image mises en relation de similitude dans les index d'image n'étant pas plus éloignées qu'une limite commensurable aux dimensions des échantillons.

2. Procédé de recherche d'échantillons d'images selon la revendication 1, **caractérisé en ce que** les images sont comprimées plusieurs fois et possèdent plusieurs index, associés à des limites différentes, et **en ce qu'**un desdits index est choisi pour chaque image selon les dimensions des échantillons.

**3.** Procédé de recherche d'échantillons d'images selon l'une quelconque des revendications 1 ou 2, **caractérisé en ce que** les images sont comprimées plusieurs fois et possèdent aussi un index dépourvu de limite, par lequel les images sont reconstituées.

**4.** Procédé de recherche d'échantillons d'images selon l'une quelconque des revendications 1 à 3, **caractérisé en ce que** les images sont comprimées plusieurs fois et possèdent plusieurs index, les portions mises en relation de similitude dans les index comprenant des secteurs (R) d'image obtenus en divisant les images par des grilles, les grilles ayant des pas différents pour chacun des index.

**5.** Procédé de recherche d'échantillons d'images selon l'une quelconque des revendications 1 à 4, **caractérisé en ce que** les portions mises en relation de similitude consistent en des secteurs d'image obtenus en divisant les images par des grilles et des domaines (D) d'image obtenus en agglomérant plusieurs secteurs (R) contigus.

**6.** Procédé de recherche d'échantillons d'images selon la revendication 5, **caractérisé en ce que** les portions mises en relation de similitude comprennent aussi des agglomérations successives (D(2)) des domaines (D) d'image.

**7.** Procédé de recherche d'échantillons d'images selon l'une quelconque des revendications 1 à 6, **caractérisé en ce que** les index des échantillons et des images subissent une sélection pour ne retenir afin d'être comparées que des portions des échantillons et des images présentant un écart-type (σ) important de distribution de luminosité.

**8.** Procédé de recherche d'échantillon d'images selon la revendication 7, **caractérisé en ce que** les index des images sont classés en catégories correspondant à des plages différentes des écarts-types.

**9.** Procédé de recherche d'échantillons d'images selon l'une quelconque des revendications 1 à 8, **caractérisé en ce que** les index des échantillons sont comparés avec ceux des images en donnant un résultat égal à un pourcentage d'éléments des index des échantillons sensiblement identiques à des éléments homologues des index des images.

**10.** Procédé de recherche d'échantillons d'images selon la revendication 6, **caractérisé en ce que** les portions mises en relation de similitude comprennent les domaines d'image (D), mis en relation de similitude entre eux, et les agglomérations successives (D(2)), mises en relation de similitude entre elles.

**11.** Procédé de recherche d'échantillons d'images selon l'une quelconque des revendications 1 à 10, **caractérisé en ce que** les index sont comparés en ce qui concerne des translations (tx, ty) entre les portions différentes mises en relation de similitude.

**12.** Procédé de recherche d'échantillons d'images selon la revendication 11, **caractérisé en ce que** les index sont comparés en ce qui concerne des coefficients de contraste (s).

**13.** Procédé de recherche d'échantillons d'images selon la revendication 12, **caractérisé en ce que** les index sont comparés en ce qui concerne des coefficients de luminosité (o).

**14.** Procédé de recherche d'échantillons d'images selon les revendications 5 et 11, **caractérisé en ce que** les index sont comparés en ce qui concerne des relations géométriques (γ) entre les portions différentes mises en relation de similitude.

**Patentansprüche**

**1.** Verfahren zur automatischen Suche von Mustern (f) in Bildern einer Datenbank,
**dadurch gekennzeichnet, dass** es darin besteht, die Muster (f') und die Bilder (f) zu komprimieren, um digitale Indexe zu erhalten, welche die Fraktaleigenschaften der Muster und der Bilder und insbesondere Ähnlichkeitsrelationen zwischen verschiedenen Teilstücken (R, D) eines selben Musters oder eines selben Bildes ausdrücken, und die Indexe der Muster mit den Indexen der Bilder zu vergleichen, wobei die in den Bild-Indexen in Ähnlichkeitsrelation gebrachten Teilstücke eines selben Bildes nicht entfernter sind als ein mit den Dimensionen der Muster kommensurabler Grenzwert.

**2.** Verfahren zur Suche von Bildmustem nach Anspruch 1, **dadurch gekennzeichnet, dass** die Bilder mehrfach komprimiert werden und mehrere verschiedenen Grenzwerten zugeordnete Indexe besitzen, und dadurch, dass einer der genannten Indexe für jedes Bild entsprechend den Dimensionen der Muster ausgewählt wird.

**3.** Verfahren zur Suche von Bildmustem nach einem der Ansprüche 1 oder 2, **dadurch gekennzeichnet, dass** die Bilder mehrfach komprimiert werden

11       **EP 0 833 262 B1**       12

und auch einen Index ohne Grenzwert besitzen, durch den die Bilder wiederhergestellt werden.

4. Verfahren zur Suche von Bildmustem nach einem der Ansprüche 1 bis 3, **dadurch gekennzeichnet, dass** die Bilder mehrfach komprimiert werden und mehrere Indexe besitzen, wobei die in den Indexen in Ähnlichkeitsrelation gebrachten Teilstücke Bildsektoren (R) umfassen, erlangt durch Unterteilung der Bilder durch Gitter, wobei die Gitter für jeden der Indexe unterschiedliche Teilungen haben.

5. Verfahren zur Suche von Bildmustern nach einem der Ansprüche 1 bis 4, **dadurch gekennzeichnet, dass** die in Ähnlichkeitsrelation gebrachten Teilstücke gebildet werden durch Bildsektoren, erlangt durch Unterteilung der Bilder durch Gitter, und Bildbereiche (D), erlangt durch Agglomeration mehrerer aneinandergrenzender Sektoren (R).

6. Verfahren zur Suche von Bildmustern nach Anspruch 5, **dadurch gekennzeichnet, dass** die in Ähnlichkeitsrelation gebrachten Teilstücke auch sukzessive Agglomerationen (D(2)) der Bildbereiche (D) umfassen.

7. Verfahren zur Suche von Bildmustem nach einem der Ansprüche 1 bis 6, **dadurch gekennzeichnet, dass** die Indexe der Muster und der Bilder einer Selektion unterzogen werden, um zum Zwecke des Vergleichs nur Teilstücke der Muster und der Bilder zu berücksichtigen, die einen großen typischen Helligkeitverteilungs-Abstand (σ) haben.

8. Verfahren zur Suche von Bildmustem nach Anspruch 7, **dadurch gekennzeichnet, dass** die Indexe der Bilder nach Kategorien klassifiziert werden, die verschiedenen Bereichen der typischen Abstände entsprechen.

9. Verfahren zur Suche von Bildmustem nach einem der Ansprüche 1 bis 8, **dadurch gekennzeichnet, dass** die Indexe der Muster verglichen werden mit denen der Bilder mit einem Resultat gleich einem Prozentsatz der Indexe der Muster im Wesentlichen identisch mit homologen Elementen der Indexe der Bilder.

10. Verfahren zur Suche von Bildmustem nach Anspruch 6, **dadurch gekennzeichnet, dass** die in Ähnlichkeitsrelation gebrachten Teilstücke die miteinander in Ähnlichkeitsrelation gebrachten Bildbereiche (D) und die miteinander in Ähnlichkeitsrelation gebrachten sukzessiven Agglomerationen ($D^{(2)}$) umfassen.

11. Verfahren zur Suche von Bildmustem nach einem der Ansprüche 1 bis 10, **dadurch gekennzeichnet,**

**dass** die Indexe verglichen werden bezüglich der Translationen (tx, ty) zwischen den verschiedenen in Ähnlichkeitsrelation gebrachten Teilstücken.

12. Verfahren zur Suche von Bildmustem nach Anspruch 11, **dadurch gekennzeichnet, dass** die Indexe verglichen werden bezüglich der Kontrastkoeffizienten (s).

13. Verfahren zur Suche von Bildmustem nach Anspruch 12, **dadurch gekennzeichnet, dass** die Indexe verglichen werden bezüglich der Helligkeitskoeffizienten (o).

14. Verfahren zur Suche von Bildmustern nach den Ansprüchen 5 und 11, **dadurch gekennzeichnet, dass** die Indexe verglichen werden bezüglich der geometrischen Relationen (γ) zwischen den verschiedenen in Ähnlichkeitsrelation gebrachten Teilstücken.

**Claims**

1. Process for the automatic search for samples (f') in images (f) of a data base, **characterized in that** it consists of compressing the samples (f') and images (f) in order to obtain numerical indexes expressing fractal properties of the samples and images and in particular similarity relations between different portions (R, D) of the same sample or the same image, and comparing the indexes of the samples with the indexes of the images, the portions of the same image brought into a similarity relationship in the image indexes being no further removed than a limit commensurate with the dimensions of the samples.

2. Process for the search for samples of images according to claim 1, **characterized in that** the images are compressed several times and have several indexes associated with different limits and **in that** one of said indexes is chosen for each image in accordance with the dimensions of the samples.

3. Process for the search for samples of images according to either of the claims 1 and 2, **characterized in that** the images are compressed several times and also have a limit-free index, by which the images are reconstituted.

4. Process for the search for samples of images according to any one of the claims 1 to 3, **characterized in that** the images are compressed several times and have several indexes, the portions brought into similarity relationship in the indexes having image ranges (R) obtained by dividing the images by grids, the grids having different spacings for each of the indexes.

5. Process for the search for samples of images according to any one of the claims 1 to 4, **characterized in that** the portions brought into similarity relationship consist of image ranges obtained by dividing the images by grids and image domains (D) obtained by agglomerating several contiguous ranges (R).

6. Process for the search for samples of images according to claim 5, **characterized in that** the portions brought into similarity relationship also incorporate successive agglomerations (D2) of image domains (D).

7. Process for the search for samples of images according to any one of the claims 1 to 6, **characterized in that** the indexes of samples and images undergo a selection in order to retain for comparison purposes only the portions of samples and images having a high brightness distribution standard deviation ($\sigma$).

8. Process for the search for samples of images according to claim 7, **characterized in that** the indexes of images are classified into categories corresponding to different standard deviation ranges.

9. Process for the search for samples of images according to any one of the claims 1 to 8, **characterized in that** the indexes of samples are compared with those of images giving a result equal to a percentage of elements of the indexes of the samples substantially identical to homologous elements of indexes of images.

10. Process for the search for samples of images according to claim 6, **characterized in that** the portions brought into similarity relationship comprise image domains (D) brought into a similarity relationship with one another and the successive agglomerations (D2) brought into similarity relationship with one another.

11. Process for the search for samples of images according to any one of the claims 1 to 10, **characterized in that** the indexes are compared with regards to the translation (tx, ty) between the different portions brought into similarity relationship.

12. Process for the search for samples of images according to claim 11, **characterized in that** the indexes are compared with respect to contrast coefficients.

13. Process for the search for samples of images according to claim 12, **characterized in that** the indexes are compared with respect to brightness coefficients (o).

14. Process for the search for samples of images according to claims 5 and 11, **characterized in that** the indexes are compared with respect to geometrical relations ($\gamma$) between different portions brought into similarity relationship.

FIG. 1

FIG. 2

FIG. 3

9

FIG. 4

FIG. 5

INDEX RÉORGANISÉ

$\sigma \geq \sigma_0$ $\qquad$ $\sigma_0 < \sigma \leq \sigma_1$ $\qquad$ $\sigma_1 < \sigma \leq \sigma_2$

FIG. 6

INDEX ORIGINAL

FIG. 7

FIG. 8

FIG. 9

FIG. 10

FIG. 11

FIG. 12

COMPRESSION DES
IMAGES (CRÉATION
DES INDEX)

ENREGISTREMENT
DES INDEX EN BASE
DE DONNÉES

COMPRESSION DE
L'ÉCHANTILLON (CRÉATION
D'UN INDEX)

COMPARAISONS SUCCESSIVES DE
L'INDEX D'ÉCHANTILLON AVEC LES
INDEX D'IMAGES

EVALUATION (SCORES) DES
COMPARAISONS

RECONSTITUTION D'IMAGES CHOISIES
EN FONCTION DES COMPARAISONS
POUR EXAMEN

FIG. 13